# EUROPEAN PATENT SPECIFICATION

(11) **EP 3 085 951 B1**
(45) Date of publication and mention of the grant of the patent: **01.08.2018**
(21) Application number: 16164702.9
(22) Date of filing: 11.04.2016
(51) Int. Cl.: F03B 13/06, F03B 17/02, F03D 9/00, F03D 9/14

(54) **OFFSHORE FLOATING POWER GENERATOR**
SCHWIMMENDER OFFSHORE-STROMGENERATOR
GÉNÉRATEUR DE PUISSANCE FLOTTANTE EN MER

(30) Priority: 24.04.2015 KR 20150058262
(43) Date of publication of application: 26.10.2016
(73) Proprietor: Kepco Engineering & Construction Company, Inc., Gimcheon-si Gyeongsangbuk-do 39660 (KR)
(72) Inventor: PARK, Koo Won, 05510 Seoul (KR); KIM, Jong Kawn, 16817 Gyeonggi-do (KR); CHOI, Soo Young, 16921 Gyeonggi-do (KR)
(74) Representative: J A Kemp

(56) References cited:
- EP-A1- 2 418 375
- WO-A2-2013/163979
- DE-A1- 2 843 675
- DE-A1-102013 015 082
- FR-A- 716 038
- US-A- 4 141 670
- US-A1- 2012 056 430

## Description

The present invention relates to an offshore floating power generator, and more particularly, to an offshore floating power generator including a sea water reservoir floating on the sea surface and allowing effective power generation by using a water level difference between a water level in the sea water reservoir and sea level.

Energy sources such as wind power, sunlight, and tidal power have recently been noticed as new renewable energy sources. These energy sources can be used in power generation without fear of depletion. However, use of the energy sources may be limited due to the following characteristics.

Although wind power is stronger on the sea than on land, it is difficult to predict when and how strong wind power is generated. Moreover, seasonal variation of wind power is very large, and the duration thereof is also discontinuous.

Sunlight is provided only during the daytime, and the intensity of sunlight is also greatly affected by the season and weather.

In regard to tidal power, while long-term prediction of the intensity and time of generation of tidal power is possible to some extent among offshore energy sources, variation in the intensity of tidal power according to time is great, and the time that tidal power reaches a peak is changed each day by being delayed by 50 minutes each day.

As described above, while wind power, sunlight, and tidal power are fundamentally differentiated from fossil fuel as renewable energy sources, the intensity and time of generation of these energy sources are irregular and the duration thereof is discontinuous. Thus, the intensity and time of power generation using these energy sources are inevitably irregular, and the duration thereof is also discontinuous. Although a method of generating power using the above renewable energies and storing the power in a storage battery for use at a required time is theoretically possible, then the size of the storage battery has to be huge and the storage battery is be regularly replaced. In other words, there are limitations in generating power for use at a desired time due to excessive costs for installation and maintenance of a storage battery.

Accordingly, a novel power generator for generating power of good quality at a required time by using renewable energy sources is required.

EP-2,418,375, on which the two part form of claim 1 is based, discloses an offshore floating power generator comprising: a sea water reservoir configured to store sea water, the sea water reservoir being ascended or descended according to the amount of stored sea water while floating on the sea surface; an inlet pipe configured to guide the sea water flowing through an inlet portion to the sea water reservoir; a water turbine generator provided on the inlet pipe; and a water level adjustor configured to discharge the sea water stored in the sea water reservoir to the outside, wherein, when a difference in water levels is generated as a water level of the sea water reservoir is lowered to be lower than a water level outside the sea water reservoir, power is generated by using the water turbine generator when sea water enters the sea water reservoir through the inlet pipe

One or more exemplary embodiments include an offshore floating power generator, and more particularly, to an offshore floating power generator including a sea water reservoir that floats on the sea surface, and allowing effective power generation by using a water level difference between a water level in the sea water reservoir and sea level.

Additional aspects will be set forth in part in the description which follows and, in part, will be apparent from the description, or may be learned by practice of the presented embodiments.

According to the invention, an offshore floating power generator includes all the features of claim 1. The offshore floating power generator may further include a first valve and a second valve in the inlet pipe, wherein the first valve is provided between the inlet portion and the water turbine generator, and the second valve is provided between the water turbine generator and the sea water reservoir.

The offshore floating power generator may further include a discharge pipe that is branched off from the inlet pipe, wherein sea water stored in the sea water reservoir is discharged through the discharge pipe.

The water turbine generator may function as a generator when the sea water enters, and function as a pump to discharge the sea water from the sea water reservoir to the outside to thereby function as the water level adjustor.

A wind power generating unit or a sunlight power generating unit may be provided on the sea water reservoir.

A tidal power generating unit may be provided under the sea water reservoir.

A screen may be provided between the first valve and the water turbine generator to filter out foreign substances.

An outer wall of the sea water reservoir may be formed of concrete.

The sea water reservoir may be connected to the ocean floor via a mooring rope, and a length of the mooring rope may be adjusted according to a depth at which the sea water reservoir is sunk under the sea surface.

The sea water flowing through the inlet portion may be stored in a flow velocity smoothing tank and then flow into the sea water reservoir.

The inlet portion may include slits that are spaced apart from one another along a circumferential direction thereof so that sea water flows through the slits.

An area over which sea water flows through the slits may be greater than a cross-section of the inlet pipe.

The inlet pipe may include a first inlet pipe connecting the inlet portion and the flow velocity smoothing tank and a second inlet pipe connecting the flow velocity smoothing tank and the sea water reservoir, wherein the screen filtering out foreign substances, the first valve between the inlet portion and the screen, and a third valve between the screen and the flow velocity smoothing tank are provided on the first inlet pipe, and a fourth valve between the flow velocity smoothing tank and the water turbine generator and the second valve between the water turbine generator and the sea water reservoir are provided on the second inlet pipe.

A fender beam mitigating an impact on the sea water reservoir due to collision with a ship or a drifting structure may be provided on a lateral side of the sea water reservoir. Corners of a bottom surface of the sea water reservoir may be round.

A reinforcement wall may be provided inside the sea water reservoir to structurally reinforce the sea water reservoir.

The offshore floating power generator may further include a buoyancy stabilizing room, wherein an inner portion of the buoyancy stabilizing room is formed of a steel material, an outer portion of the buoyancy stabilizing room is formed of concrete, and the buoyancy stabilizing room is filled with air.

A width of the slits may be reduced from the outside to the inside.

These and/or other aspects will become apparent and more readily appreciated from the following description of the embodiments, taken in conjunction with the accompanying drawings in which:
FIG. 1 is a schematic view of an offshore floating power generator according to an exemplary embodiment of the inventive concept;
FIG. 2 is a cross-sectional view of an offshore floating power generator according to an exemplary embodiment of the inventive concept;
FIG. 3 is an excerpt view of an inlet portion included in the offshore floating power generator illustrated in FIG. 2;
FIG. 4 is a cross-sectional view of the inlet portion of FIG. 3, cut along a line A-A;
FIGS. 5 through 7 illustrate installation examples of a mooring rope;
FIGS. 8 and 9 illustrate the offshore floating power generator how flow of sea water is influenced by a waveform of a water surface;
FIG. 10 is a schematic view of the offshore floating power generator including a flow velocity smoothing tank according to an exemplary embodiment;
FIG. 11 is a schematic plan view of the offshore floating power generator of FIG. 10;
FIGS. 12 and 13 are schematic views illustrating the offshore floating power generator including an equilibrium water tank;
FIGS. 14 and 15 are schematic views of the offshore floating power generator including a fender beam;
FIG. 16 illustrates flow separation occurring when the sea water reservoir is drawn;
FIG. 17 illustrates the offshore floating power generator when flow separation is reduced;
FIG. 18 is a schematic view of a reinforcement wall inside the sea water reservoir;
FIG. 19 is a schematic view of a buoyancy stabilizing room;
FIG. 20 shows a cross-section and a front view of an inlet portion according to another exemplary embodiment; and
FIG. 21 shows a cross-section and a front view of an inlet portion according to another exemplary embodiment.

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the exemplary embodiments are merely described below, by referring to the figures, to explain aspects of the present description. Expressions such as "at least one of," when preceding a list of elements, modify the entire list of elements and do not modify the individual elements of the list.

The advantages and features of the inventive concept and methods of achieving the advantages and features will be described more fully with reference to the accompanying drawings, in which exemplary embodiments of the inventive concept are shown. The inventive concept may, however, be embodied in many different forms and should not be construed as being limited to the embodiments set forth herein; rather these embodiments are provided so that this disclosure will be thorough and complete, and will fully convey the concept of the inventive concept to one of ordinary skill in the art. Throughout the specification, like reference numerals refer to like elements.

Meanwhile, the terminology used herein is for the purpose of describing particular embodiments only and is not intended to be limiting of exemplary embodiments. As used herein, the singular forms "a," "an" and "the" are intended to include the plural forms as well, unless the context clearly indicates otherwise. It will be further understood that the terms "comprises" and/or "comprising" used herein specify the presence of stated components thereof, but do not preclude the presence or addition of one or more other components.

Unless otherwise defined, all terms (including technical and scientific terms) used herein have the same meaning as commonly understood by one of ordinary skill in the art to which exemplary embodiments belong.

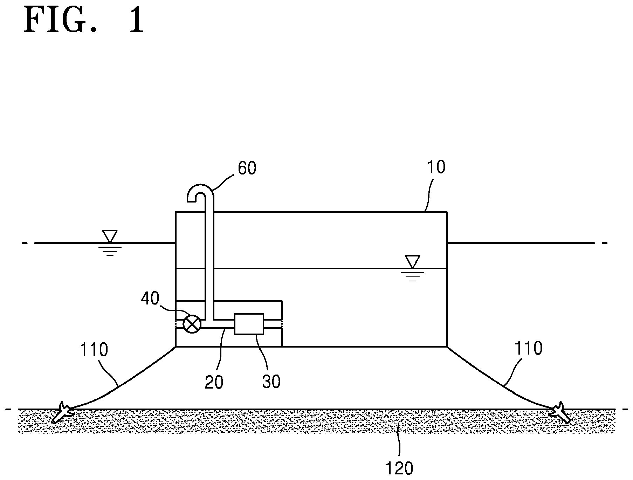

As illustrated in FIG. 1, the offshore floating power generator according to the exemplary embodiment of the inventive concept includes a sea water reservoir 10, an inlet pipe 20, a water turbine generator 30, and a water level adjustor.

The sea water reservoir 10 stores sea water and floats on the sea surface. The sea water reservoir 10 ascends or descends from the sea surface according to the amount of sea water stored therein. The sea water reservoir 10 is provided to produce power by using a water level difference between the sea surface and a water level in the sea water reservoir 10.

According to the present exemplary embodiment, an outer wall of the sea water reservoir 10 is formed of concrete. More preferably, in order to prevent cracks in concrete due to tensile force, the outer wall of the sea water reservoir 10 may be formed of prestressed concrete (PC) that prevents cracks by maintaining a constant compressive force in a concrete portion of the outer wall by installing Tendon that is inserted into a concrete wall body.

According to the exemplary embodiment of the inventive concept, when the sea water reservoir 10 moors on the sea surface, water power generation is performed by using a water level difference between the open sea and the sea water reservoir 10. Thus, a water level difference is to be secured. A buoyancy structure is sunk deeper as a weight thereof per bottom area increases, thereby forming a greater water level difference.

When the sea water reservoir 10 is formed of a steel material, the weight thereof per unit area is too small and a water level difference may also be small. Thus, a water level difference may be easily provided when the sea water reservoir 10 is a concrete structure.

In addition, manufacturing the sea water reservoir 10 by using a concrete structure is advantageous in terms of maintenance. Since sea water flows into and out of the sea water reservoir 10, the sea water reservoir 10 needs to be protected from corroding. If the sea water reservoir 10 is formed of a steel material, an outer wall and inner portions of the sea water reservoir 10 have to be regularly coated with protected coating to prevent corrosion, and if a structure size is large, it is as a matter of fact impossible to pull up the structure to land. Thus, the sea water reservoir 10 formed of concrete according to the exemplary embodiment of the inventive concept does not require protection coating, thereby increasing a usage period thereof and easiness in terms of maintenance.

Moreover, by forming the sea water reservoir 10 by using a concrete structure, a long natural period of oscillation of the structure is set so that the sea water reservoir 10 stably floats on the sea surface. In detail, a buoyancy structure flowing on the sea surface not only has to endure wave power but also prevent resonance due to waves. If the buoyancy structure resonates, the amplitude of vertical movement of the buoyancy structure increases abruptly so that tensile force acting upon a mooring rope 110 also abruptly increases, resulting in damages to a connection portion between the mooring rope 110 and the buoyancy structure or detachment of the mooring rope 110 from the ocean floor 120. A resonance period of the buoyancy structure increases when a mass of the buoyancy structure increases, and thus, the sea water reservoir 10 formed of concrete may have a longer natural period of oscillations than that formed of a steel material.

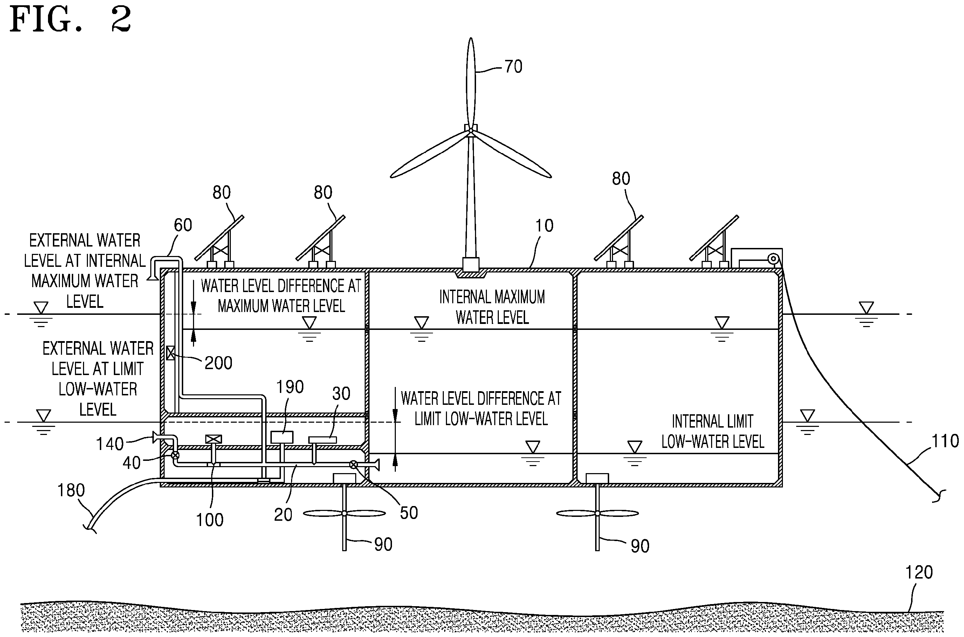

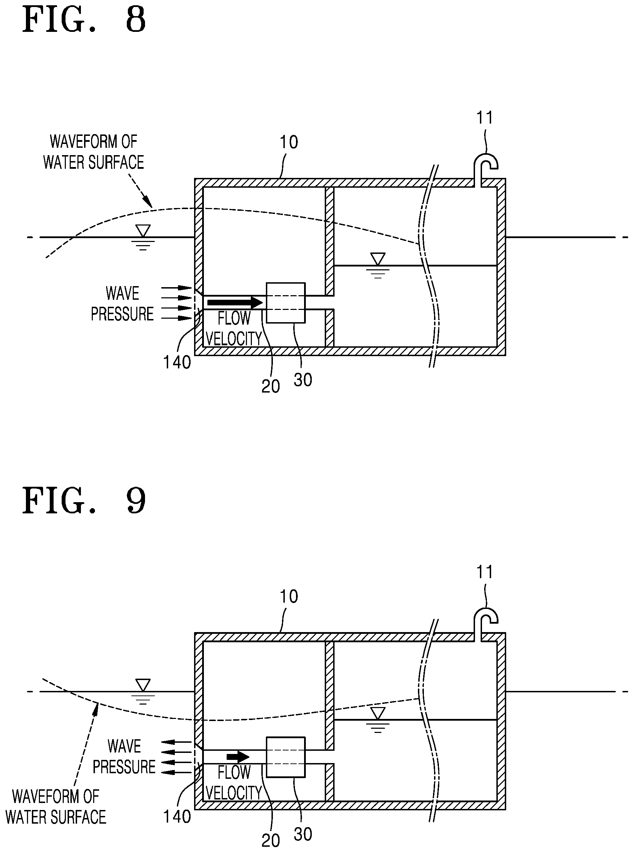

In addition, as illustrated in FIG. 2, a machine room accommodating the inlet pipe 20 and the water turbine generator 30 or the like is included in the sea water reservoir 10, and the machine room may be entered through an entrance passage. For example, transportation equipment 200 transporting people or cargo is installed in the entrance passage. In addition, as illustrated in FIGS. 8 through 10, an air vent 11, through which the atmospheric pressure may act upon a water level of the sea water reservoir 10, is mounted in the sea water reservoir 10.

The inlet pipe 20 guides sea water flowing through an inlet portion 140, into the sea water reservoir 10.

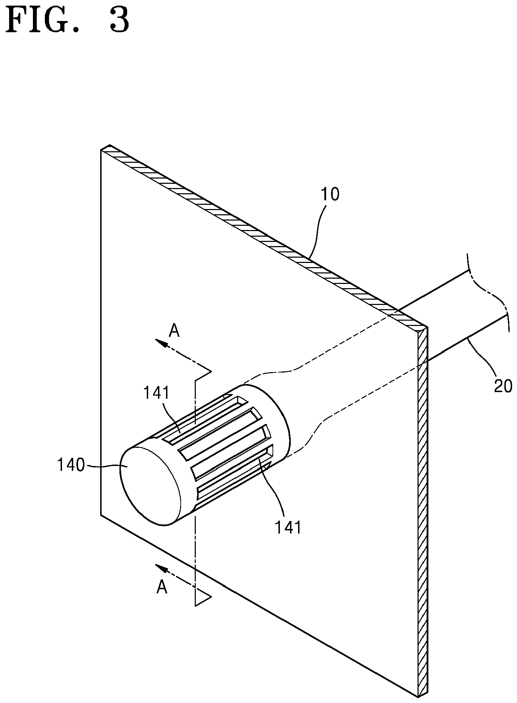

The inlet portion 140 is a portion through which sea water flows from the outside, and is disposed at a lateral lower end of the sea water reservoir 10 according to the present exemplary embodiment. According to the present exemplary embodiment, the inlet portion 140 protrudes from the sea water reservoir 10 as illustrated in FIG. 3. In addition, slits 141 that are circumferentially spaced apart from one another are formed in the inlet portion 140.

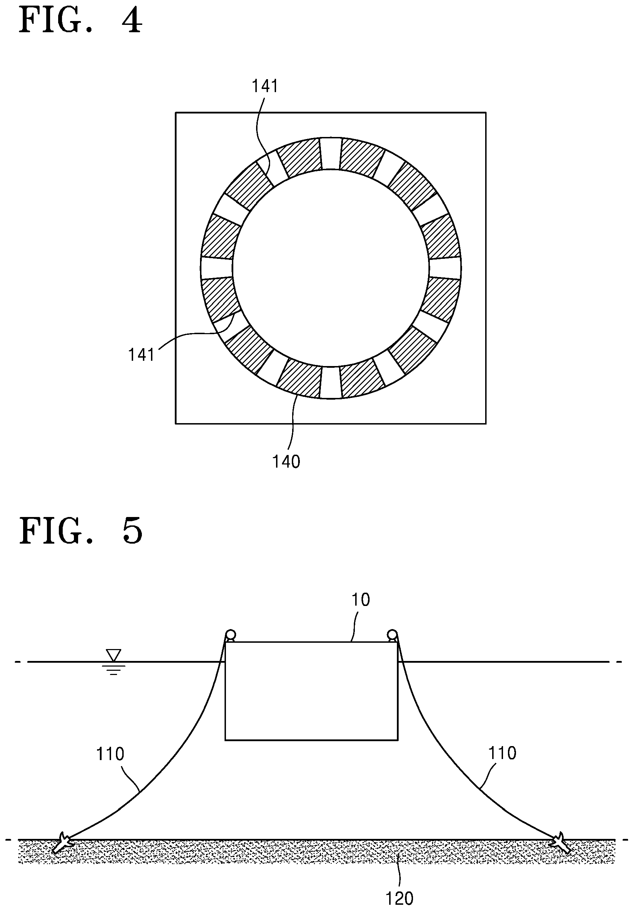

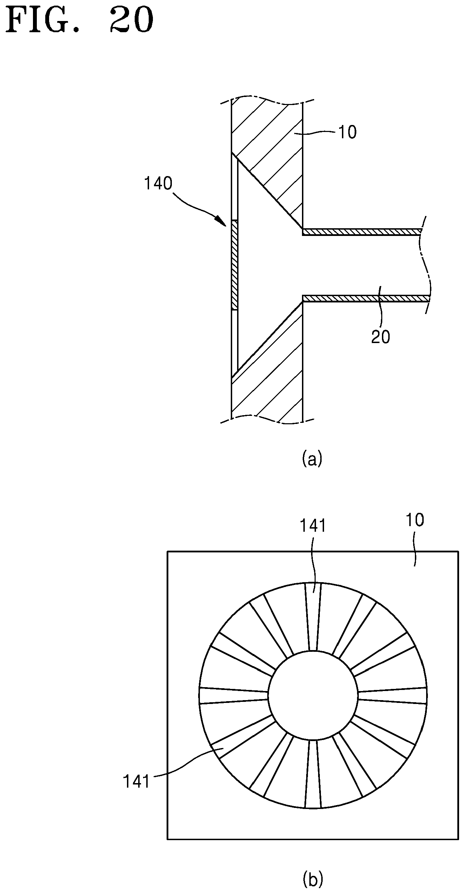

As illustrated in FIG. 4, the slits 141 may have a width reducing from the outer side towards the inner side. An area over which sea water flows through the slit 141 is larger than a cross-section of the inlet pipe 20. That is, a total area of outermost widths of the slit 141 is greater than the cross-section of the inlet pipe 20. Alternatively, the inlet portion 140 may also not protrude from the outer wall of the sea water reservoir 10, as illustrated in, for example, FIGS. 1, 8, and 9. In detail, FIG. 20A is a cross-sectional view of the inlet portion 140 according to another exemplary embodiment, and FIG. 20B is a front view of the inlet portion 140 of FIG. 20A. As illustrated in FIG. 20A, the inlet portion 140 may not protrude from the outer wall of the sea water reservoir 10 but may be formed such that a plurality of slits 141 are formed as illustrated in FIG. 20B so that sea water may flow therethrough.

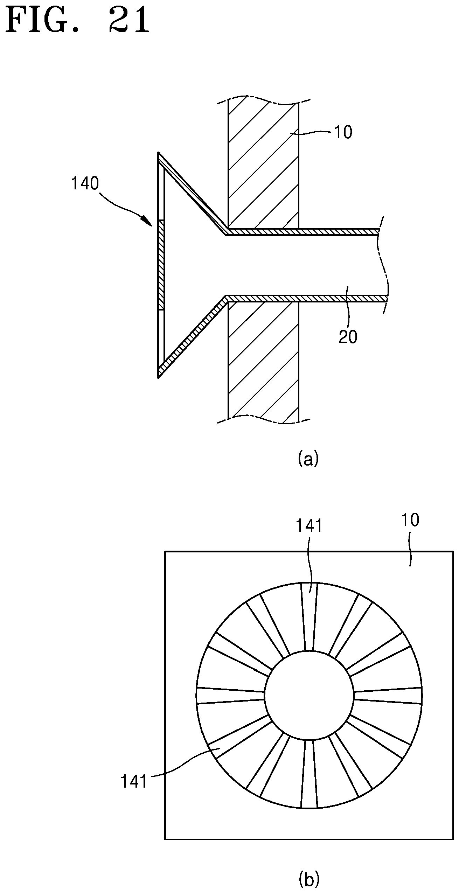

In addition, the inlet portion 140 may protrude from the outer wall of the sea water reservoir 10 in a different manner from that illustrated in FIG. 3. In detail, FIG. 21A is a cross-sectional view of the inlet portion 140 according to another exemplary embodiment, and FIG. 21B is a front view of the inlet portion 140 of FIG. 21A. As illustrated in FIG. 21A, the inlet portion 140 may protrude and extend in a radial direction from the outer wall of the sea water reservoir 10, and a plurality of slits 141 may be formed therein, as illustrated in FIG. 21B, so that sea water flows therethrough.

The water turbine generator 30 is provided to generate water power based on a water level difference, and is provided on the inlet pipe 20. The structure of the water turbine generator 30 is well known in the art, and thus detailed description thereof is omitted.

The water level adjustor is provided in order to discharge sea water stored in the sea water reservoir 10 to the outside. According to the present exemplary embodiment, a function of the water level adjustor is performed by using the water turbine generator 30.

The water turbine generator 30 according to the present exemplary embodiment functions as a power generator when sea water enters, and functions as a pump to discharge the sea water from the sea water reservoir 10 to the outside. Thus, the water turbine generator 30 is a so-called reversible water turbine generator, performing the functions of both a power generator and a pump. Alternatively, the water level adjusting function may also be performed using an additional pump.

According to the structure as described above, sea water is discharged to the open sea by using the water level adjustor, and a water level in the sea water reservoir 10 becomes lower than a water level outside the sea water reservoir 10, so that, while a water level difference is generated, sea water flows into the sea water reservoir 10, and power is generated by using the water turbine generator 30.

A first valve 40 and a second valve 50 are provided on the inlet pipe 20. The first valve 40 is disposed between the inlet portion 140 and the water turbine generator 30, and the second valve 50 is disposed between the water turbine generator 30 and the sea water reservoir 10. A screen 100 filtering out foreign substances is provided between the first valve 40 and the water turbine generator 30.

A discharge pipe 60, through which sea water stored in the sea water reservoir 10, is discharged is branched off from the inlet pipe 20. As illustrated in FIGS. 1 and 2, an end portion of the discharge pipe 60 extends through an upper portion of the sea water reservoir 10, and sea water is discharged through the discharge pipe 60.

As illustrated in FIG. 2, in order to generate a water level difference between the open sea and the sea water reservoir 10, while the first valve 40 is closed and the second valve 50 is opened, the sea water of the sea water reservoir 10 is pumped by using power generated using at least one of wind power, sunlight, and tidal power generating units, which will be described later, or by using power drawn from land.

According to the present exemplary embodiment, the water turbine generator 30 functions as a pump, and the pumped sea water is discharged to the open sea through the discharge pipe 60. While the sea water is being discharged, a water level of the sea water reservoir 10 is gradually reduced, and the sea water reservoir 10 on the whole is gradually moved up.

As illustrated in FIG. 2, a lowermost limit of the sea water reservoir 10 is an internal limit low-water level, and the level of the open sea seen from the sea water reservoir 10 becomes an external water level at the internal limit low-water level due to the sea water reservoir 10 that has been moved up. When the water level of the sea water reservoir 10 reaches around the internal limit low-water level, pumping is stopped.

After forming a standby state for power generation as above, the first valve 40 and the second valve 50 are opened so that sea water naturally flows into the sea water reservoir 10 through the inlet portion 140, and power is generated here by using the water turbine generator 30. A power generating unit including the water turbine generator 30 is connected to a main transformer 190 provided on the sea water reservoir 10, and the main transformer 190 is connected to a substation on the shore through a submarine cable 180 so as to transmit generated power to the substation.

The submarine cable 180 includes a communication line, a power transmission line, and a line for power that is used to drive internal elements in a power station and is drawn from land.

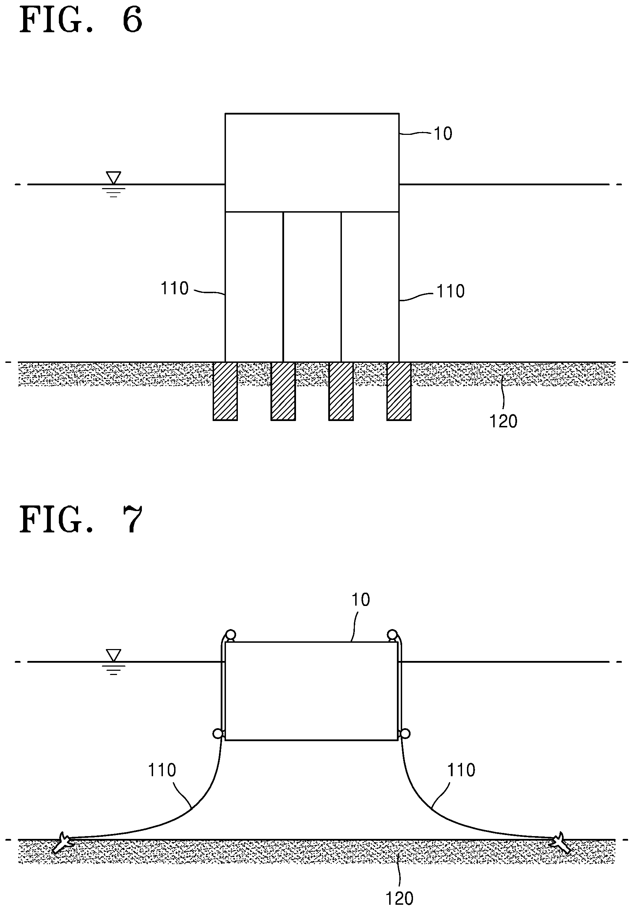

The sea water reservoir 10 is connected to the ocean floor 120 via the mooring rope 110. FIGS. 5 through 7 illustrate the mooring rope 110 connected to the sea water reservoir 10 in various manners. FIG. 5 illustrates an example where the mooring rope 110 connects an upper portion of the sea water reservoir 10 to the ocean floor 120. FIG. 6 illustrates an example where an end of the mooring rope 110 is firmly fixed to the ocean floor 120. FIG. 7 illustrates an example where the mooring rope 110 is disposed closely to an outer wall of the sea water reservoir 10 to extend downwards. The mooring rope 110 may be installed in various manners.

According to the present exemplary embodiment, a length of the mooring rope 110 is adjustable according to the amount that the sea water reservoir 10 is sunk under sea level. A sufficient length of the mooring rope 110 should be secured such that the sea water reservoir 10 may ascend and descend by itself.

If the mooring rope 110 is too long, the sea water reservoir 10 may float (horizontal motion or rotational motion) due to tidal currents or due to collision with a ship or a drifting structure and hamper stability of the submarine cable 180 buried underwater.

Thus, the length of the mooring rope 110 is to be adjusted appropriately.

The length of the mooring rope 110 may be configured to be automatically adjusted by, for example, measuring a water level in the sea water reservoir 10 by using an automatic water level measuring device to measure a depth at which the sea water reservoir 10 is sunk and by using a winch system. The automatic water level measuring device may use various methods such as a method of installing a buoy on the surface of water, a method of measuring a height of the surface of water by radiating an ultrasonic wave to the surface of water, or a method of measuring electric resistance of a conductor sunken underwater.

Referring to FIG. 2, the offshore floating power generator according to the present exemplary embodiment of the inventive concept includes a wind power generating unit 70, a sunlight power generating unit 80, and a tidal power generating unit 90.

The wind power generating unit 70 or the sunlight power generating unit 80 may be provided on the sea water reservoir 10, and the tidal power generating unit 90 may be provided under the sea water reservoir 10. The wind power generating unit 70, the sunlight power generating unit 80, and the tidal power generating unit 90 may be selectively installed or all of them may be installed. The wind power generating unit 70, the sunlight power generating unit 80, and the tidal power generating unit 90 are well known in the art, and thus description thereof is omitted.

The wind power, sunlight, and tidal power generating units 70, 80, and 90 transmit generated power to land so that the power is available for use, and moreover, the power may also be used as power for driving internal elements of a power plant to pump the sea water of the sea water reservoir 10 to the open sea so as to set a standby state for water-power generation.

In addition, according to the present exemplary embodiment, the offshore floating power generator includes a flow velocity smoothing tank 130, an equilibrium water tank 160, a fender beam 170, a round portion 15, a buoyancy stabilization room 220, and a reinforcement wall 16.

The flow velocity smoothing tank 130 is provided to prevent interruption of water power generation due to back flow of sea water caused by a change in a wave pressure when sea water enters through the inlet portion 140.

In detail, FIG. 8 illustrates the offshore floating power generator at a wave crest where a waveform of the water surface curves upwards. As illustrated in FIG. 8, at the wave crest, wave pressure is exerted into the sea water reservoir 10 so that a flow speed of sea water into the inlet pipe 20 may be abruptly increased.

Conversely, FIG. 9 illustrates the offshore floating power generator at a ridge of a wave where a waveform of the water surface curves downwards. As illustrated in FIG. 9, at the ridge of a wave, wave pressure is exerted away from the sea water reservoir 10 so that a flow speed of sea water through the inlet pipe 20 is reduced.

If the ridge of a wave is great so that the water surface is greatly lowered further from the water level of the sea water reservoir 10, sea water may flow back from the sea water reservoir 10 and water power generation may be stopped. Thus, the flow velocity smoothing tank 130 is provided to minimize a change in a flow velocity of sea water flowing into the sea water reservoir 10 regardless of the ridge of a wave.

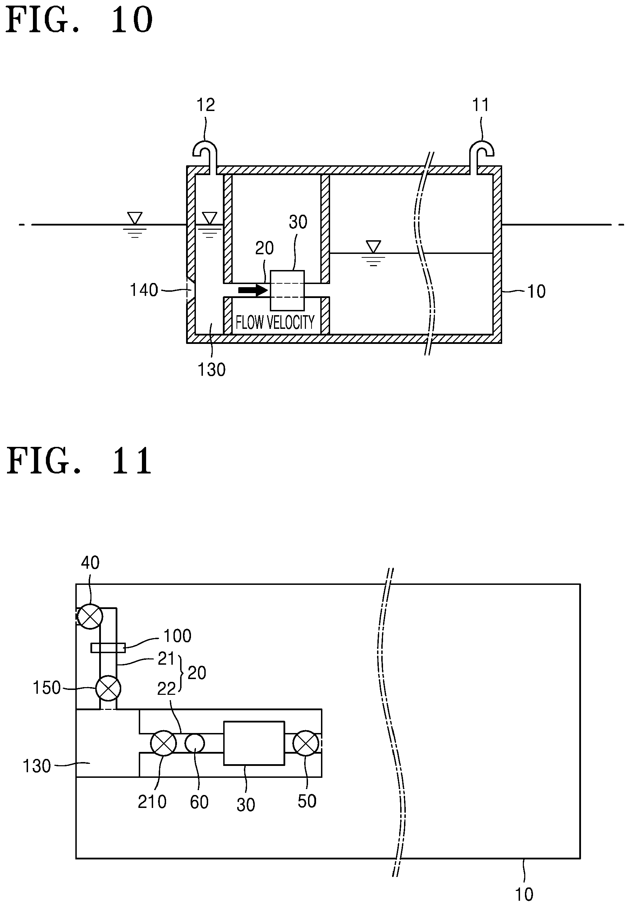

When the flow velocity smoothing tank 130 is installed, a reduction ratio of a range of fluctuation of a flow velocity is affected by an area of a water surface of the flow velocity smoothing tank 130 and a cross-section of the inlet pipe 20. When the area of the water surface of the flow velocity smoothing tank 130 is about 5 times to about ten times the cross-section of the inlet pipe 20, a range of fluctuation of the flow velocity is reduced to about 1/10 to about 1/5 compared to when the flow velocity smoothing tank 130 is not included. FIG. 10 schematically illustrates sea water flowing through the inlet portion 140 and passing through the flow velocity smoothing tank 130 into the inlet pipe 20. An air vent 12 is mounted in the flow velocity smoothing tank 130 so that atmospheric pressure acts upon a water level of the flow velocity smoothing tank 130.

According to the present exemplary embodiment, when the flow velocity smoothing tank 130 is mounted, the inlet pipe 20 includes a first inlet pipe 21 and a second inlet pipe 22, as illustrated in FIG. 11.

The first inlet pipe 21 connects the inlet portion 140 and the flow velocity smoothing tank 130 to each other. The second inlet pipe 22 connects the flow velocity smoothing tank 130 and the sea water reservoir 10 to each other.

Also, the screen 100, the first valve 40, and a third valve 150 are provided on the first inlet pipe 21. The screen 100 is provided to filter out foreign substances contained in sea water. The first valve 40 is provided between the inlet portion 140 and the screen 100. The third valve 150 is provided between the screen 100 and the flow velocity smoothing tank 130.

A fourth valve 210, the discharge pipe 60, the water turbine generator 30, and the second valve 50 are provided on the second inlet pipe 22. The fourth valve 210 is provided between the flow velocity smoothing tank 130 and the water turbine generator 30. The second valve 50 is provided between the water turbine generator 30 and the sea water reservoir 10. The discharge pipe 60 and the water turbine generator 30 have been described above in detail, and thus, detailed description thereof is omitted.

When the flow velocity smoothing tank 130 is included, the first through fourth valves 40, 50, 150, and 210 operate as follows as sea water is discharged or enters.

When pumping sea water of the sea water reservoir 10 to the open sea, the fourth valve 210 is closed and the second valve 50 is opened. In this state, sea water is pumped out to the open sea through the discharge pipe 60 by using the water turbine generator 30.

When the sea water of the sea water reservoir 10 is sufficiently pumped to the open sea so that a standby state allowing water power generation is set, only the first valve 40 is closed but the other valves are opened.

While water power generation is being conducted by letting sea water enter, all of the first through fourth valves 40, 50, 150, and 210 are opened. When examining the screen 100, the first valve 40 and the third valve 150 are closed, and when examining or repairing the water turbine generator 30, the second valve 50 and the fourth valve 210 are closed.

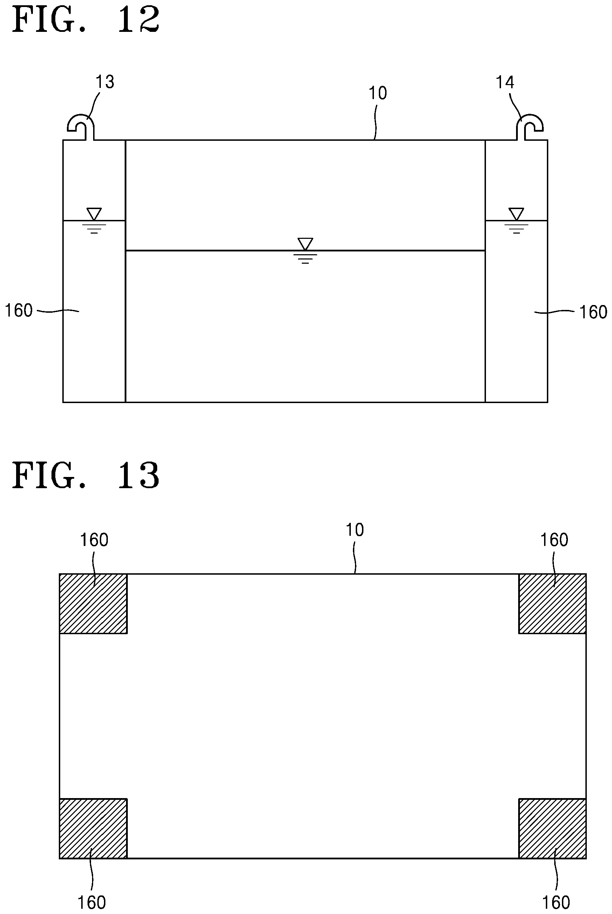

The equilibrium water tank 160 is included to maintain a horizontality of the sea water reservoir 10. As illustrated in FIGS. 12 and 13, the equilibrium water tank 160 is symmetrically provided at each edge of the sea water reservoir 10. According to the present exemplary embodiment, the equilibrium water tank 160 is provided at each corner of the sea water reservoir 10. Air vents 13 and 14 are formed in the equilibrium water tank 160 so that atmospheric pressure may act upon a water level of the equilibrium water tank 160.

The equilibrium water tank 160 supplements the function of maintaining equilibrium of the sea water reservoir 10 by using the mooring rope 110. A change in a weight of an edge portion of a floating structure that is relatively far from a center thereof greatly affects an inclination of the floating structure. Thus, the equilibrium water tank 160 is symmetrically mounted at the edges of the sea water reservoir 10 so that the sea water reservoir 10 may sensitively react to adjustment of an inclination thereof.

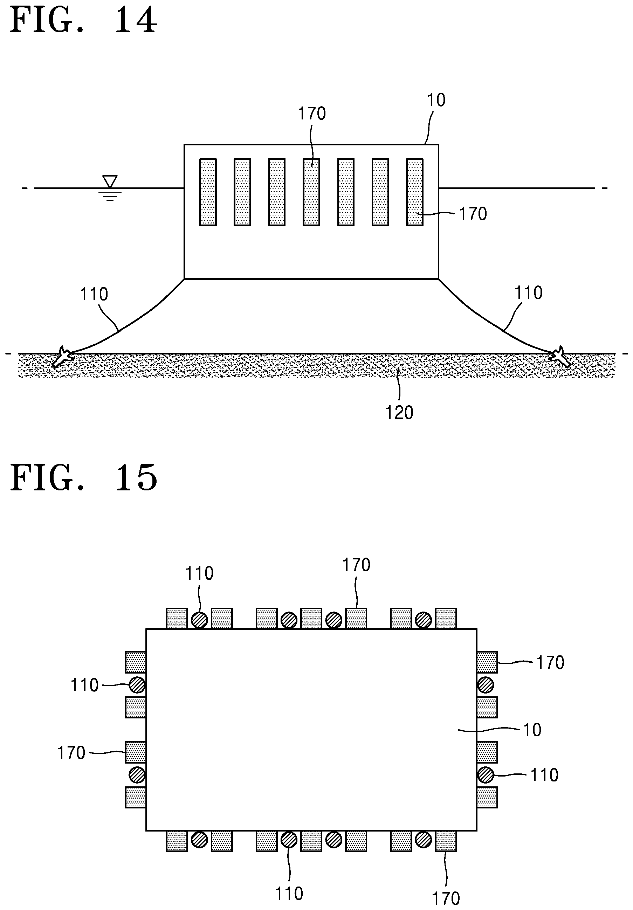

The fender beams 170 are provided to mitigate an impact with respect to a ship or other drifting structures. As illustrated in FIGS. 14 and 15, according to the present exemplary embodiment, the fender beams 170 are provided along a lateral circumference of the sea water reservoir 10. The mooring rope 110 extends downwards between the fender beams 170.

In addition, the sea water reservoir 10 according to the present exemplary embodiment includes the round portion 15 at each edge of a bottom surface thereof in order to get rid of flow separation. The offshore floating power generator according to the present inventive concept may be towed to a long distance sea or to a foreign country.

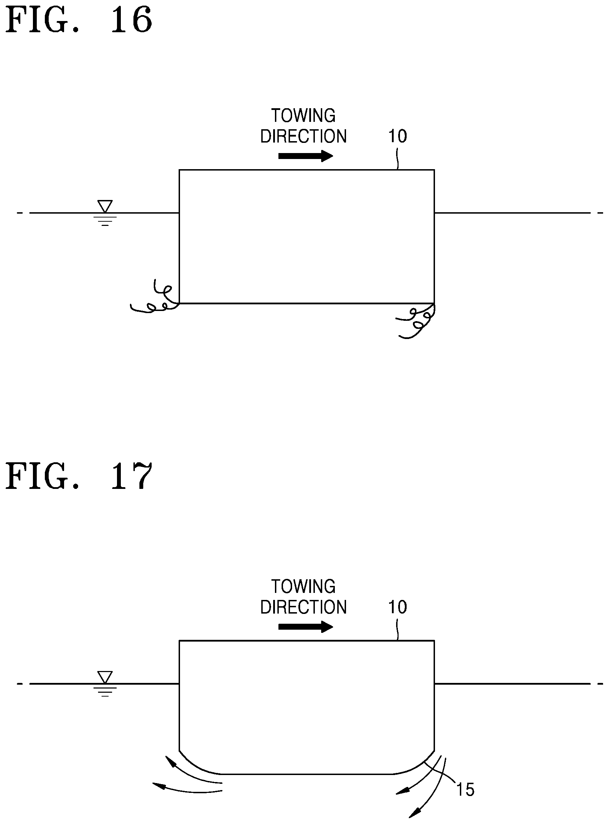

In this case, a drag that affects a towing force and a towing speed is to be reduced. The drag is increased because a negative pressure is formed due to flow separation formed at corners of a bottom surface of the sea water reservoir 10 as illustrated in FIG. 16.

Thus, as illustrated in FIG. 17, as the corners of the bottom surface of the sea water reservoir 10 are round, flow separation may be gotten rid of, thereby minimizing drag during towing.

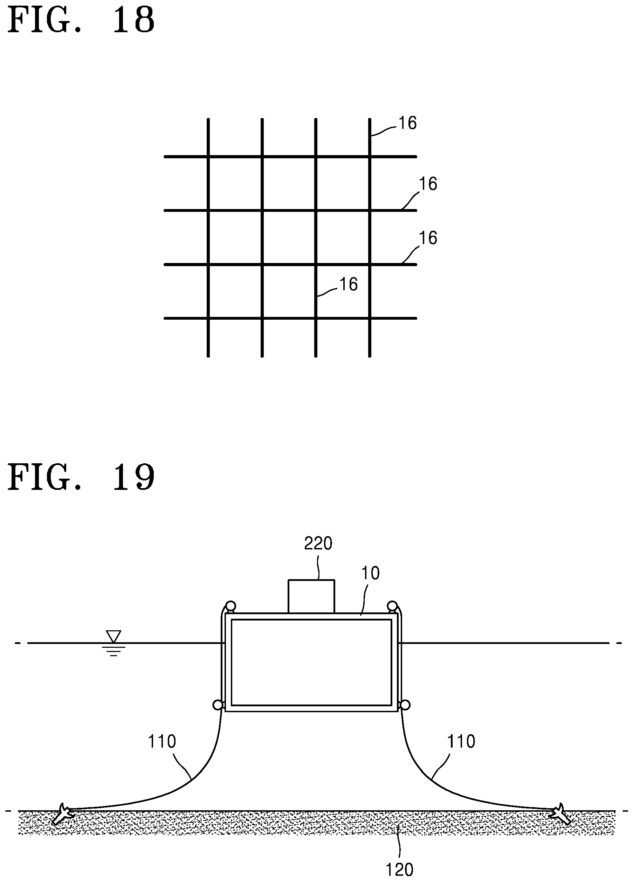

The reinforcement wall 16 is provided to increase structural stability of the sea water reservoir 10. The sea water reservoir 10 is used when the offshore floating power generator has a very great width, length, and height, and thus a plurality of reinforcement walls 16 are installed in the sea water reservoir 10 to provide structural stability thereof. The reinforcement walls 16 are arranged at uniform intervals in a lattice form when referring to FIG. 18, but this is exemplary, and an arrangement of the reinforcement walls 16 may be modified in various manners as long as structural reinforcement of the sea water reservoir 10 and circulation of sea water therein are easily provided.

The buoyancy stabilizing room 220 is provided to prevent the sea water reservoir 10 from sinking. An inner portion of the buoyancy stabilizing room 220 is formed of a steel material, and an outer portion of the buoyancy stabilizing room 220 is formed of concrete, and the buoyancy stabilizing room 220 is filled with air.

As illustrated in FIG. 19, according to the present exemplary embodiment, the buoyancy stabilizing room 220 is provided on the sea water reservoir 10. The buoyancy stabilizing room 220 may be manufacture by using a hybrid concrete construction method in which a steel sheet is placed such that water tightness is maintained, and then concrete is deposited on an outer circumference of the steel sheet. The buoyancy stabilizing room 220 is filled with air.

However, a location of the buoyancy stabilizing room 220 is not limited to the above. For example, the buoyancy stabilizing room 220 may be accommodated inside the sea water reservoir 10 and disposed above a water level of sea water filled in the sea water reservoir 10, or may be disposed on a sidewall of the sea water reservoir 10.

As described above, according to the offshore floating power generator of the present inventive concept, power is generated by using a water level difference between the sea water reservoir 10 and the open sea. Thus, a time when to generate power, and an amount of power to be generated and a duration of power generation may be accurately predicted, thereby producing quality power.

As the sea water reservoir 10 floats on the sea surface, new space is created on the sea. Thus, the offshore floating power generator according to the inventive concept may be used as an alternative in the case where it is difficult to install a power generator on land. Also, the offshore floating power generator may be manufactured at a location where it is easy to manufacture the same, and then towed, and thus may be transported to a long distance, for example, to a foreign country.

In addition, the sea water reservoir 10 does not disturb circulation of tidal currents or sea water compared to a structure fixed on the ocean floor 120, and is thus environment-friendly, and does not cause sedimentation or erosion of the ocean floor and thus does not cause geographical changes. While a fixed structure consumes more material and equipment at a deeper depth of water, the sea water reservoir 10 is a floating type, and is thus installed regardless of a change in a water depth, and thus is cost-effective in terms of construction costs.

The sea water reservoir 10 may be manufactured on land or in a column water region and then transported by floating and then moored on a site. Thus, the manufacture of the sea water reservoir 10 is less influenced by sea weather such as typhoons or hurricanes than a fixed-type structure, and is thus constructed faster. In addition, the sea water reservoir 10 is towable over a far distance, and thus is highly mobile and is also easily applicable to a sea area where a difference between the ebb and flow of the tides is great.

In addition, the offshore floating power generator according to the present inventive concept generates power by using renewable energies such as wind power, sunlight, and tidal force together, and thus, the renewable energies which are likely change greatly may be converted to power of a uniform output.

That is, power generated by driving the wind power, sunlight, and tidal power generating units 70, 80, and 90 may be transported to land for use or the power may be used as power for driving internal elements of a power plant so as to use the same as a power for pumping sea water of the sea water reservoir 10 to the open sea to thereby build a power standby state, and when a demand of power abruptly increases or if power is wished, the power may be generated through water power generation.

The sea water reservoir 10 is automatically descended while a water level of the sea water reservoir 10 is increased as sea water enters the sea water reservoir 10, and thus, a variation in a difference in water levels during power generation is small so that quality power having uniform output may be intensively produced at a desired time.

According to the offshore floating power generator of the inventive concept, power is generated by using a water level difference between a water level in a sea water reservoir and sea level, so that quality power is provided at a required time, and when, how much, and how long power is to be generated may be accurately predicted.

In addition, a wind power generating unit or a sunlight power generating unit is provided on the sea water reservoir, and a tidal power generating unit may be provided under the sea water reservoir, thereby transmitting power produced using the generating units to land or using the power as power for driving internal elements of a power plant to adjust the water level so as to intensively produce quality power and supply the power to land.

It should be understood that exemplary embodiments described herein should be considered in a descriptive sense only and not for purposes of limitation. Descriptions of features or aspects within each exemplary embodiment should typically be considered as available for other similar features or aspects in other exemplary embodiments.

While one or more exemplary embodiments have been described with reference to the figures, it will be understood by those of ordinary skill in the art that various changes in form and details may be made therein without departing from the scope of the inventive concept as defined by the following claims.

## Claims

1. An offshore floating power generator comprising:
a sea water reservoir (10) configured to store sea water, the sea water reservoir (10) being ascended or descended according to the amount of stored sea water while floating on the sea surface;
an inlet pipe (20) configured to guide the sea water flowing through an inlet portion (140) to the sea water reservoir (10);
a water turbine generator (30) provided on the inlet pipe (20); and
a water level adjustor configured to discharge the sea water stored in the sea water reservoir (10) to the outside,
wherein, when a difference in water levels is generated as a water level of the sea water reservoir (10) is lowered to be lower than a water level outside the sea water reservoir (10), power is generated by using the water turbine generator (30) when sea water enters the sea water reservoir through the inlet pipe (20),
**characterised in that**
the offshore floating power generator further comprises:
a flow velocity smoothing tank (130), arranged so that the sea water flowing through the inlet portion (140) is stored in the flow velocity smoothing tank (130) and then flows into the sea water reservoir (10); and
an equilibrium tank (160) symmetrically provided at edges of the sea water reservoir (10) to maintain an equilibrium of the sea water reservoir (10).

2. The offshore floating power generator of claim 1, further comprising a first valve (40) and a second valve (50) in the inlet pipe (20),
wherein the first valve (40) is provided between the inlet portion (140) and the water turbine generator (30), and the second valve (50) is provided between the water turbine generator (30) and the sea water reservoir (10).

3. The offshore floating power generator of claim 2, wherein a screen (100) is provided between the first valve (40) and the water turbine generator (30) to filter out foreign substances.

4. The offshore floating power generator of claim 3, wherein the inlet pipe (20) comprises a first inlet pipe (21) connecting the inlet portion (140) and the flow velocity smoothing tank (130) and a second inlet pipe (22) connecting the flow velocity smoothing tank (130) and the sea water reservoir (10),
wherein the screen (100) filtering out foreign substances, the first valve (4) between the inlet portion (140) and the screen (100), and a third valve (150) between the screen (100) and the flow velocity smoothing tank (130) are provided on the first inlet pipe (21), and
a fourth valve (210) between the flow velocity smoothing tank (130) and the water turbine generator (30) and the second valve (50) between the water turbine generator (30) and the sea water reservoir (10) are provided on the second inlet pipe (22).

5. The offshore floating power generator of any one of the preceding claims, further comprising a discharge pipe (60) that is branched off from the inlet pipe (20),
wherein sea water stored in the sea water reservoir (10) is discharged through the discharge pipe (60).

6. The offshore floating power generator of any one of the preceding claims, wherein the water turbine generator (30) functions as a generator when the sea water enters, and functions as a pump to discharge the sea water from the sea water reservoir (10) to the outside to thereby function as the water level adjustor.

7. The offshore floating power generator of any one of the preceding claims, wherein a wind power generating unit (70) or a sunlight power generating unit (80) is provided on the sea water reservoir (10), or a tidal power generating unit (90) is provided under the sea water reservoir (10).

8. The offshore floating power generator of any one of the preceding claims, wherein an outer wall of the sea water reservoir (10) is formed of concrete.

9. The offshore floating power generator of any one of the preceding claims, wherein corners of a bottom surface of the sea water reservoir (10) are round.

10. The offshore floating power generator of any one of the preceding claims, wherein a reinforcement wall (16) is provided inside the sea water reservoir (10) to structurally reinforce the sea water reservoir (10).

11. The offshore floating power generator of any one of the preceding claims, wherein the sea water reservoir (10) is connected to the ocean floor (120) via a mooring rope (110), and a length of the mooring rope (110) is adjusted according to a depth at which the sea water reservoir (10) is sunk under the sea surface.

12. The offshore floating power generator of any one of the preceding claims, wherein the inlet portion (140) comprises slits (141) that are spaced apart from one another along a circumferential direction thereof so that sea water flows through the slits (141).

13. The offshore floating power generator of claim 12, wherein an area over which sea water flows through the slits (141) is greater than a cross-section of the inlet pipe (20) and/or a width of the slits (141) is reduced from the outside to the inside.

14. The offshore floating power generator of any one of the preceding claims, wherein a fender beam (170) mitigating an impact on the sea water reservoir (10) due to collision with a ship or a drifting structure is provided on a lateral side of the sea water reservoir (10).

15. The offshore floating power generator of any one of the preceding claims, further comprising a buoyancy stabilizing room (220), wherein an inner portion of the buoyancy stabilizing room (220) is formed of a steel material, an outer portion of the buoyancy stabilizing room (220) is formed of concrete, and the buoyancy stabilizing room (220) is filled with air.

## Patentansprüche

1. Offshore-schwimmender Stromgenerator, umfassend:
ein Meerwasserreservoir (10), das konfiguriert ist, um Meerwasser zu speichern, wobei das Meerwasserreservoir (10) gemäß der Menge an gespeichertem Meerwasser aufsteigt oder absteigt, während es auf der Meeresoberfläche schwimmt;
ein Einlassrohr (20), das konfiguriert ist, um das Meerwasser zu führen, das durch einen Einlassabschnitt (140) zum Meerwasserreservoir (10) fließt;
einen Wasserturbinengenerator (30), der am Einlassrohr (20) bereitgestellt ist; und
einen Wasserstandeinsteller, der konfiguriert ist, um das im Meerwasserreservoir (10) gespeicherte Meerwasser nach außen auszulassen,
wobei, wenn ein Unterschied der Wasserstände erzeugt wird, wenn ein Wasserstand des Meerwasserreservoirs (10) verringert wird, um geringer als ein Wasserstand außerhalb des Meerwasserreservoirs (10) zu sein, Strom unter Verwendung des Wasserturbinengenerators (30) erzeugt wird, wenn Meerwasser in das Meerwasserreservoir durch das Einlassrohr (20) eintritt,
**dadurch gekennzeichnet, dass**
der Offshore-schwimmende Stromgenerator ferner Folgendes umfasst:
einen Fließgeschwindigkeits-Glättungstank (130), der so angeordnet ist, dass das Meerwasser, das durch den Einlassabschnitt (140) fließt, im Fließgeschwindigkeits-Glättungstank (130) gespeichert wird und dann in das Meerwasserreservoir (10) fließt; und
einen Ausgleichstank (160), der symmetrisch an Rändern des Meerwasserreservoirs (10) bereitgestellt ist, um einen Ausgleich des Meerwasserreservoirs (10) aufrechtzuhalten.

2. Offshore-schwimmender Stromgenerator nach Anspruch 1, ferner umfassend ein erstes Ventil (40) und ein zweites Ventil (50) im Einlassrohr (20),
wobei das erste Ventil (40) zwischen dem Einlassabschnitt (140) und dem Wasserturbinengenerator (30) bereitgestellt ist und das zweite Ventil (50) zwischen dem Wasserturbinengenerator (30) und dem Meerwasserreservoir (10) bereitgestellt ist.

3. Offshore-schwimmender Stromgenerator nach Anspruch 2, wobei ein Gittersieb (100) zwischen dem ersten Ventil (40) und dem Wasserturbinengenerator (30) bereitgestellt ist, um Fremdstoffe herauszufiltern.

4. Offshore-schwimmender Stromgenerator nach Anspruch 3, wobei das Einlassrohr (20) ein erstes Einlassrohr (21), das den Einlassabschnitt (140) und den Fließgeschwindigkeits-Glättungstank (130) verbindet, und ein zweites Einlassrohr (22), das den Fließgeschwindigkeits-Glättungstank (130) und das Meerwasserreservoir (10) verbindet, umfasst,
wobei das Gittersieb (100), das Fremdstoffe herausfiltert, das erste Ventil (4) zwischen dem Einlassabschnitt (140) und dem Gittersieb (100) und ein drittes Ventil (150) zwischen dem Gittersieb (100) und dem Fließgeschwindigkeits-Glättungstank (130) am ersten Einlassrohr (21) bereitgestellt sind und
ein viertes Ventil (210) zwischen dem Fließgeschwindigkeits-Glättungstank (130) und dem Wasserturbinengenerator (30) und das zweite Ventil (50) zwischen dem Wasserturbinengenerator (30) und dem Meerwasserreservoir (10) am zweiten Einlassrohr (22) bereitgestellt sind.

5. Offshore-schwimmender Stromgenerator nach einem der vorstehenden Ansprüche, ferner umfassend ein Auslassrohr (60), das vom Einlassrohr (20) abgezweigt ist,
wobei Meerwasser, das im Meerwasserreservoir (10) gespeichert ist, durch das Auslassrohr (60) ausgelassen wird.

6. Offshore-schwimmender Stromgenerator nach einem der vorstehenden Ansprüche, wobei der Wasserturbinengenerator (30) als ein Generator fungiert, wenn das Meerwasser eintritt, und als eine Pumpe zum Auslassen des Meerwassers aus dem Meerwasserreservoir (10) nach außen fungiert, um dadurch als der Wasserstandeinsteller zu fungieren.

7. Offshore-schwimmender Stromgenerator nach einem der vorstehenden Ansprüche, wobei eine Windenergie-Erzeugungseinheit (70) oder einen Sonnenenergie-Erzeugungseinheit (80) am Meerwasserreservoir (10) bereitgestellt ist oder eine Gezeitenenergie-Erzeugungseinheit (90) unter dem Meerwasserreservoir (10) bereitgestellt ist.

8. Offshore-schwimmender Stromgenerator nach einem der vorstehenden Ansprüche, wobei eine Außenwand des Meerwasserreservoirs (10) aus Beton gebildet ist.

9. Offshore-schwimmender Stromgenerator nach einem der vorstehenden Ansprüche, wobei Ecken einer Bodenfläche des Meerwasserreservoirs (10) rund sind.

10. Offshore-schwimmender Stromgenerator nach einem der vorstehenden Ansprüche, wobei eine Verstärkungswand (16) im Meerwasserreservoir (10) bereitgestellt ist, um das Meerwasserreservoir (10) strukturell zu verstärken.

11. Offshore-schwimmender Stromgenerator nach einem der vorstehenden Ansprüche, wobei das Meerwasserreservoir (10) mit dem Meeresboden (120) über eine Halteleine (110) verbunden ist und eine Länge der Halteleine (110) gemäß einer Tiefe eingestellt ist, auf die das Meerwasserreservoir (10) unter der Meeresoberfläche abgesenkt ist.

12. Offshore-schwimmender Stromgenerator nach einem der vorstehenden Ansprüche, wobei der Einlassabschnitt (140) Schlitze (141) umfasst, die entlang einer Umfangsrichtung davon voneinander beabstandet sind, sodass Meerwasser durch die Schlitze (141) fließt.

13. Offshore-schwimmender Stromgenerator nach Anspruch 12, wobei ein Bereich, über den Meerwasser durch die Schlitze (141) fließt, größer ist als ein Querschnitt des Einlassrohrs (20) und/oder eine Breite der Schlitze (141) von außen nach innen reduziert ist.

14. Offshore-schwimmender Stromgenerator nach einem der vorstehenden Ansprüche, wobei ein Fenderbalken (170), der eine Stoßwirkung auf das Meerwasserreservoir (10) aufgrund eines Zusammenstoßes mit einem Schiff oder einer treibenden Struktur abschwächt, an einer lateralen Seite des Meerwasserreservoirs (10) bereitgestellt ist.

15. Offshore-schwimmender Stromgenerator nach einem der vorstehenden Ansprüche, ferner umfassend einen Auftriebsstabilisierungsraum (220) umfasst, wobei ein Innenabschnitt des Auftriebsstabilisierungsraums (220) aus einem Stahlmaterial gebildet ist, ein Außenabschnitt des Auftriebsstabilisierungsraums (220) aus Beton gebildet ist und der Auftriebsstabilisierungsraum (220) mit Luft gefüllt ist.

## Revendications

1. Générateur d'énergie flottant en mer comprenant :
un réservoir d'eau de mer (10) conçu pour stocker l'eau de mer, le réservoir d'eau de mer (10) étant élevé ou descendu en fonction de la quantité d'eau de mer stockée pendant qu'il flotte à la surface de la mer ;
un tuyau d'admission (20) conçu pour guider l'eau de mer s'écoulant à travers une partie d'admission (140) vers le réservoir d'eau de mer (10) ;
un générateur de turbine à eau (30) disposé sur le tuyau d'admission (20) ; et
un ajusteur de niveau d'eau conçu pour évacuer l'eau de mer stockée dans le réservoir d'eau de mer (10) vers l'extérieur,
lorsqu'une différence de niveaux d'eau est générée alors qu'un niveau d'eau du réservoir d'eau de mer (10) est abaissé pour être inférieur à un niveau d'eau à l'extérieur du réservoir d'eau de mer (10), l'énergie étant générée au moyen du générateur de turbine à eau (30) lorsque l'eau de mer entre dans le réservoir d'eau de mer par le tuyau d'admission (20),
**caractérisé en ce que**
le générateur d'énergie flottant en mer comprend en outre :
une citerne de lissage de vitesse d'écoulement (130), agencée de manière que l'eau de mer circulant par la partie d'admission (140) est stockée dans la citerne de lissage de vitesse d'écoulement (130) et s'écoule ensuite dans le réservoir d'eau de mer (10) ; et
une citerne d'équilibre (160) disposée de manière symétrique au niveau de bords du réservoir d'eau de mer (10) pour maintenir un équilibre du réservoir d'eau de mer (10).

2. Générateur d'énergie flottant en mer selon la revendication 1, comprenant en outre une première soupape (40) et une deuxième soupape (50) dans le tuyau d'admission (20),
dans lequel la première soupape (40) est disposée entre la partie d'admission (140) et le générateur de turbine à eau (30), et la deuxième soupape (50) est disposée entre le générateur de turbine à eau (30) et le réservoir d'eau de mer (10).

3. Générateur d'énergie flottant en mer selon la revendication 2, dans lequel un écran (100) est disposé entre la première soupape (40) et le générateur de turbine à eau (30) pour éliminer par filtrage des substances étrangères.

4. Générateur d'énergie flottant en mer selon la revendication 3, dans lequel le tuyau d'admission (20) comprend un premier tuyau d'admission (21) raccordant la partie d'admission (140) et la citerne de lissage de vitesse d'écoulement (130) et un deuxième tuyau d'admission (22) raccordant la citerne de lissage de vitesse d'écoulement (130) et le réservoir d'eau de mer (10),
dans lequel l'écran (100) éliminant par filtrage des substances étrangères, la première soupape (4) entre la partie d'admission (140) et l'écran (100) et une troisième soupape (150) entre l'écran (100) et la citerne de lissage de vitesse d'écoulement (130) sont disposés sur le premier tuyau d'admission (21), et
une quatrième soupape (210) entre la citerne de lissage de vitesse d'écoulement (130) et le générateur de turbine à eau (30) et la deuxième soupape (50) entre le générateur de turbine à eau (30) et le réservoir d'eau de mer (10) sont disposées sur le deuxième tuyau d'admission (22).

5. Générateur d'énergie flottant en mer selon l'une quelconque des revendications précédentes, comprenant en outre un tuyau d'évacuation (60) qui est dérivé du tuyau d'admission (20),
dans lequel l'eau de mer stockée dans le réservoir d'eau de mer (10) est évacuée par le tuyau d'évacuation (60).

6. Générateur d'énergie flottant en mer selon l'une quelconque des revendications précédentes, dans lequel le générateur de turbine à eau (30) fonctionne en tant que générateur lorsque l'eau de mer entre, et fonctionne en tant que pompe pour évacuer l'eau de mer du réservoir d'eau de mer (10) vers l'extérieur pour ainsi fonctionner en tant qu'ajusteur de niveau d'eau.

7. Générateur d'énergie flottant en mer selon l'une quelconque des revendications précédentes, dans lequel une unité de génération d'énergie éolienne (70) ou une unité de génération d'énergie solaire (80) est disposée sur le réservoir d'eau de mer (10) ou une unité de génération d'énergie marémotrice (90) est disposée sous le réservoir d'eau de mer (10).

8. Générateur d'énergie flottant en mer selon l'une quelconque des revendications précédentes, dans lequel une paroi externe du réservoir d'eau de mer (10) est constituée de béton.

9. Générateur d'énergie flottant en mer selon l'une quelconque des revendications précédentes, dans lequel des angles d'une surface inférieure du réservoir d'eau de mer (10) sont ronds.

10. Générateur d'énergie flottant en mer selon l'une quelconque des revendications précédentes, dans lequel une paroi de renfort (16) est disposée à l'intérieur du réservoir d'eau de mer (10) pour renforcer structurellement le réservoir d'eau de mer (10).

11. Générateur d'énergie flottant en mer selon l'une quelconque des revendications précédentes, dans lequel le réservoir d'eau de mer (10) est relié au fond marin (120) par le biais d'une corde d'amarrage (110), et une longueur de la corde d'amarrage (110) est ajustée en fonction d'une profondeur à laquelle le réservoir d'eau de mer (10) est immergé sous la surface de la mer.

12. Générateur d'énergie flottant en mer selon l'une quelconque des revendications précédentes, dans lequel la partie d'admission (140) comprend des fentes (141) qui sont espacées les unes des autres dans une direction circonférentielle de celle-ci de manière que l'eau de mer s'écoule à travers les fentes (141).

13. Générateur d'énergie flottant en mer selon la revendication 12, dans lequel une zone sur laquelle l'eau de mer s'écoule à travers les fentes (141) est plus grande qu'une section transversale du tuyau d'admission (20) et/ou une largeur des fentes (141) est réduite de l'extérieur vers l'intérieur.

14. Générateur d'énergie flottant en mer selon l'une quelconque des revendications précédentes, dans lequel une poutre de pare-chocs (170) atténuant un impact appliqué au réservoir d'eau de mer (10) en raison d'une collision avec un navire ou une structure dérivante est disposée sur un côté latéral du réservoir d'eau de mer (10).

15. Générateur d'énergie flottant en mer selon l'une quelconque des revendications précédentes, comprenant en outre une chambre de stabilisation de flottaison (220), une partie interne de la chambre de stabilisation de flottaison (220) étant formée d'un matériau en acier, une partie externe de la chambre de stabilisation de flottaison (220) étant formée de béton et la chambre de stabilisation de flottaison (220) étant remplie d'air.
